# EUROPÄISCHE PATENTANMELDUNG

(11) **EP 3 934 080 A1**
(43) Veröffentlichungstag der Anmeldung: **05.01.2022**
(21) Anmeldenummer: 20193518.6
(22) Anmeldetag: 31.08.2020
(51) Int. Cl.: H02M 1/42, H02M 7/219

(54) **GLEICHRICHTER, ENERGIEVERSORGUNGSGERÄT UND ANLAGE**

(30) Priorität: 29.06.2020 DE 102020208058
(71) Anmelder: Siemens Aktiengesellschaft, 80333 München (DE)
(72) Erfinder: Lambrecht, Franziska, 80799 München (DE); Schwarz, Markus, 80796 München (DE); Schweigert, Harald, 1120 Wien (AT); Zapf, Jörg, 81927 München (DE)

(57) **Zusammenfassung**

Der Gleichrichter weist eine mit Stromventilen gebildeten Gleichrichterschaltung auf, bei welcher die Stromventile mit MEMS-Schaltern gebildet sind.

Das Energieversorgungsgerät weist einen solchen Gleichrichter auf.

Die Anlage weist ein Endgerät und ein solches Energieversorgungsgerät auf, wobei das Endgerät mit dem Energieversorgungsgerät zur Energieversorgung des Endgeräts verschaltbar ist.

## Beschreibung

Die Erfindung betrifft einen Gleichrichter, ein Energieversorgungsgerät sowie eine Anlage.

Eine elektrische Energieversorgung erfolgt generell über Wechselspannung. Jedoch benötigen elektronische Endgeräte wie Computer oder Smartphones oder zahlreiche Komponenten der Automatisierungstechnik regelmäßig eine - meist geringe - Gleichspannung aufgrund der intensiven Nutzung von Halbleiterelementen. Solche Halbleiterelemente erfordern meist eine eindeutige Spannungslage für den Betrieb und somit eine Gleichspannung. Zusätzlich benötigen sehr viele elektronische Geräte auch eine galvanische Trennung, um Netzspannung auf eine ungefährliche Gleichspannung, häufig im Bereich 5 V bis 30 V, zu wandeln. Dazu werden meist getaktete Stromversorgungen, welche auch einfach Netzteile genannt werden, eingesetzt.

Zur Gleichrichtung von Wechselspannungen sind Diodengleichrichter bekannt, welche in Kombination mit einem nachgeschalteten Wandler - dieser meist mit Potentialtrennung - typischerweise Wirkungsgrade zwischen 80% und 90% aufweisen. Um die Wirkungsgrade von bis zu 95% zu erreichen, werden meist Resonanzwandler eingesetzt, bei welchen Gleichrichter-Dioden der Ausgangsseite durch wesentlich effizientere Niederspannungs-MOSFETs ersetzt sind. Zum universellen Einsatz bei variablen Eingangsspannungen muss bei Resonanzwandlern jedoch eine Zwischenkreisspannung vorgeregelt werden.

Eine solche Vorregelung erfolgt typischerweise mittels einer aktiven Leistungsfaktor-Korrektur, d.h. einer *aktiven Power Factor Correction* (aktive PFC), welche zusätzlich einen nahezu sinus-förmigen Stromverlauf bereitstellt, was die Effizienz weiter erhöht und damit die Belastung von Netzzuleitungen minimiert. Allerdings stoßen auch solche Vorregelungen mit einer aktiven Leistungsfaktor-Korrektur an Effizienzgrenzen.

Es sind ferner brückenlose Gleichrichter-Topologien bekannt, welche eine Leistungsfaktor-Korrektur aufweisen. Allerdings erfordern solche Gleichrichter-Topologien einerseits einen größeren Bauraum. Andererseits sind sie teuer.

Grundsätzlich können Dioden durch Transistoren, beispielsweise MOSFETs, ersetzt werden. Allerdings ist eine Parallelschaltung vieler Transistoren teuer und Transistoren sind in der Regel nicht hinreichend spannungsfest und weisen häufig keinen hinreichend geringen Spannungsabfall auf.

Es ist daher Aufgabe der Erfindung, einen verbesserten Gleichrichter, ein verbessertes Energieversorgungsgerät sowie eine verbesserte Anlage zu schaffen. Insbesondere sollen Gleichrichter, Energieversorgungsgerät und Anlage mit höherer Energieeffizienz betreibbar sein.

Diese Aufgabe der Erfindung wird mit einem Gleichrichter mit den in Anspruch 1 angegebenen Merkmalen, mit einem Energieversorgungsgerät mit den in Anspruch 10 angegebenen Merkmalen sowie mit einer Anlage mit den in Anspruch 11 angegebenen Merkmalen gelöst. Bevorzugte Weiterbildungen sind in den zugehörigen Unteransprüchen, der nachfolgenden Beschreibung und der Zeichnung angegeben.

Der erfindungsgemäße Gleichrichter weist eine mit Stromventilen gebildeten Gleichrichterschaltung auf, bei welcher die Stromventile mit MEMS-Schaltern gebildet sind.

Unter MEMS-Schaltern (MEMS (engl.) = "Micro-Electro Mechanical Systems") im Sinne dieser Erfindung sind Schalter mit mikromechanisch gefertigten beweglichen Schaltelementen zu verstehen, welche elektrisch, insbesondere elektrostatisch, betätigbar sind.

Erfindungsgemäß sind Stromventile in Gestalt von MEMS-Schaltern vorgesehen, während im Stand der Technik Stromventile regelmäßig in Form von Dioden vorhanden sind. Der Einsatz solcher Dioden hat allerdings bei bislang bekannten Gleichrichtern Netzschlussspannungen von beispielsweise 230 V Verluste in der Netzgleichrichtung in einer Größenordnung von ca. 1 Prozent in Bezug auf die Gesamtgeräteausgangsleistung zur Folge. Bei geringeren Netzspannungen wie dem USamerikanischen 120V-Netz oder dem japanischen 100V-Netz und den jeweiligen Toleranzen dieser Netzspannungen können die Verluste der Netzdiodengleichrichter Werte von 2% in Bezug auf die Gesamtgeräteausgangsleistung erreichen. Bei angestrebten Wirkungsgraden von mindestens 95 Prozent für mittels solcher Gleichrichter realisierter Energieversorgungsgeräte stellen diese Verluste in der Ausgangsleistung eine große Herausforderung dar. Ferner bedingen die bislang in Kauf zu nehmenden Verlustleistungen einen hohen Kühlungsbedarf, der zusätzliche Komponenten zur Entwärmung erfordert. Zudem bedingt die Wärmeentwicklung das Risiko eines verfrühten Ausfalls bekannter Gleichrichter.

Demgegenüber weisen Gleichrichter mit Stromventilen in Gestalt von MEMS-Schaltern zahlreiche Vorteile auf:
So weisen MEMS-Schalter einen besonders geringen Kontaktwiderstand auf, sodass besonders geringe Verluste resultieren. Folglich sind Gleichrichter und somit auch Energieversorgungsgeräte mit solchen Gleichrichtern mit besonders hohem Wirkungsgrad ausbildbar. Zudem ist die Ausfallwahrscheinlichkeit beim Einsatz von MEMS-Schaltern als Stromventile deutlich reduziert.

Infolge der geringen Verluste kann beim Einsatz von MEMS-Schaltern zudem auf aufwendige Entwärmungskomponenten verzichtet werden, sodass der erfindungsgemäße Gleichrichter besonders kostengünstig fertigbar ist. Zudem ist der Gleichrichter aufgrund des erfindungsgemäß möglichen Verzichts auf Entwärmungskomponenten besonders leicht und kompakt ausbildbar. Insbesondere Energieversorgungsgeräte lassen sich somit leichter und kompakter ausbilden.

Vorteilhaft ist aufgrund der geringen Wärmeentwicklung auch ein Betreib bei höherer Umgegungstemperatur realisierbar.

Zweckmäßig können MEMS-Schalter nahezu leistungsfrei zum Schalten, d.h. zum Öffnen oder Schließen, angesteuert werden, sodass die MEMS-Schalter die Energieeffizienz nicht infolge ihrer Ansteuerung nennenswert reduzieren.

Weiterhin vorteilhaft sind mittels MEMS-Schaltern sehr geringe Schaltzeiten von etwa 2 - 10 Mikrosekunden erzielbar. Somit lassen sich mittels MEMS-Schaltern Schaltfrequenzen von bis zu 50-60 Hz leicht erzielen, wenn von einer Periodendauer von 8 Mikrosekunden ausgegangen wird. Zudem weisen MEMS-Schalter eine geringe Durchgangsspannung und eine vernachlässigbare Alterung auf und sind auch rasch genug durch eine Ansteuerschaltung abschaltbar, um bei Netzspannungsspitzen vor Überstrom geschützt zu werden.

Besonders bevorzugt weist der Gleichrichter einen ausgangsseitig an die Gleichrichterschaltung angebundenen Leistungswandler auf, insbesondere mit aktiver Leistungsfaktor-Korrektur, d.h. mit einem aktiven PFC. In diesem Falle lässt sich die Gleichrichterschaltung aufgrund der als MEMS-Schalter ausgebildeten Stromventile nahezu leistungslos ansteuern, d.h. schalten.

Vorzugsweise ist bei dem erfindungsgemäßen Gleichrichter die Gleichrichterschaltung eine Brückenschaltung oder die Gleichrichterschaltung weist eine Brückenschaltung auf.

Zweckmäßig ist bei dem Gleichrichter gemäß der Erfindung die Brückenschaltung eine Graetz-Schaltung oder die Brückenschaltung weist eine Graetz-Schaltung auf.

Alternativ und ebenfalls bevorzugt kann die Gleichrichterschaltung auch eine brückenlose Gleichrichterschaltung sein, insbesondere eine Bridgeless-PFC-Schaltung. Bei solchen Gleichrichterschaltungen handelt es sich um Topologien, bei welchen Zweig/e der Grätz-Schaltung durch aktiv-gesteuerte und mit typischen Arbeitsfrequenzen von 50-150kHz arbeitenden Transistoren ersetzt werden. Dabei können Transistoren der Hochsetzstufe auch gleich eine partielle Netzgleichrichtung bewirken und somit zusätzliche Diodenverluste sparen. In solchen Topologien sind Stromventile eingesetzt, die nur mit der Netzfrequenz von z.B. 50 oder 60Hz schalten müssen. In diesen Applikationen können MEMS-schalter als Stromventile eingesetzt werden, um die Verluste weiter zu reduzieren.

Bevorzugt sind bei dem erfindungsgemäßen Gleichrichter die MEMS-Schalter zum Schalten oder Öffnen angesteuert. So sind MEMS-Schalter regelmäßig mittels elektrostatischer Ansteuerung zum Schließen und/oder Öffnen des MEMS-Schalters ansteuerbar, etwa mittels eines Biegeelements, welches elektrostatisch auslenkbar ist und infolge der Auslenkung des Biegeelements Schaltkontakte aufeinander zubewegt oder beabstandet.

Bei dem Gleichrichter gemäß der Erfindung umfasst die Gleichrichterschaltung geeignet zu den MEMS-Schaltern parallel geschaltete Dioden, insbesondere Halbleiter-Dioden.

Mittels solcher parallel geschalteten Dioden können die MEMS-Schalter vorteilhaft vor hohem Stromfluss infolge von Spannungsspitzen einer Netzspannung geschützt werden. So können im Betrieb des MEMS-Schalters sogenannte Surge-Impulse auftreten, welche etwa durch einen Ladestrom eines ausgangsseitig an dem Gleichrichter angebundenen Kondensators bedingt sein können. Da Kondensatoren typischerweise vergleichsweise niederohmige Bauteile sind, kann ein Spannungsanstieg der Netzspannung, welcher über eine aktuelle Spannung des Kondensators hinausgeht, zu einem hohen Stromimpuls führen, der etwa einige 100 A für eine Zeit von 10 bis 20 Mikrosekunden ausmachen kann. Bei solchen großen Stromimpulsen können elektrische Kontakte der MEMS-Schalter leicht miteinander verschweißen.

Mittels parallel geschalteter Dioden können die resultierenden Ströme durch die MEMS-Schalter wirksam begrenzt werden, da die Durchflussspannung von Dioden, etwa im Falle von Silizium-Dioden, selbst bei einem Durchflussstrom von einigen 100 A höchstens 1,5 V beträgt. Somit kann die maximal an den MEMS-Schaltern anliegende Spannung begrenzt werden. Aus der begrenzten Spannung an den MEMS-Schaltern und dem Innenwiderstand der MEMS-Schalter folgt daher ein wirksam begrenzter Durchflussstrom durch die MEMS-Schalter. Weiterhin vorteilhaft ist eine passive Begrenzung des Durchflussstroms ohne nennenswerten Zeitverzug möglich. Dies ist insbesondere bei Surge-Impulsen besonders relevant, bei welchen ein Stromfluss innerhalb von wenigen Mikrosekunden ansteigen kann.

Bei dem erfindungsgemäßen Gleichrichter sind die Dioden vorzugsweise derart orientiert und geschaltet, dass die Dioden bei geöffneten MEMS-Schaltern mit übrigen Teilen des Gleichrichters eine Gleichrichterschaltung, vorzugsweise eine Brückenschaltung und insbesondere eine Graetz-Schaltung bilden.

In dieser Weiterbildung der Erfindung können die Dioden die Funktion der MEMS-Schalter in deren geöffneter Stellung übernehmen. Vorteilhaft können die Dioden die Gleichrichtung zu solchen Phasen des Betriebs übernehmen, in welchen sich ein Betrieb der MEMS-Schalter zur Gleichrichtung kritisch erweist. Während der überwiegenden Betriebszeit hingegen können die MEMS-Schalter die Gleichrichtung übernehmen, sodass die Effizienz der Gleichrichtung mittels des erfindungsgemäßen Gleichrichters zugleich deutlich gesteigert ist und zugleich ein ausfallsicherer Betrieb des Gleichrichters möglich ist.

Der erfindungsgemäße Gleichrichter weist in einer vorteilhaften Weiterbildung der Erfindung eine Schaltsteuerung auf, wobei die Schaltsteuerung ausgebildet ist, die MEMS-Schalter zum Schalten und Öffnen anzusteuern. Die Schaltsteuerung ist vorzugsweise ausgebildet, die MEMS-Schalter mit der Frequenz einer mit dem Gleichrichter gleichzurichtenden Wechselspannung zu schalten, sodass die MEMS-Schalter Schaltstellung mit der Frequenz der gleichzurichtenden Spannung wechseln können.

Mittels der Steuerung der MEMS-Schalter lässt sich eine Gleichrichtung mittels geeigneter Schaltung der MEMS-Schalter leicht bewerkstelligen.

Vorteilhaft ist bei dem erfindungsgemäßen Gleichrichter die Schaltsteuerung ausgebildet, die MEMS-Schalter im Bereich des Nulldurchganges der Netzspannung zu öffnen. Insbesondere in industriellen Stromnetzen wirkt eine Leistungselektronik auf die Netzspannung zurück und bewirkt Abweichungen der Netzspannung von einem sinusförmigen Verlauf. Im Extremfall können Verzerrungen eine präzise Bestimmung des Nulldurchganges der Netzspannung erschweren, sodass das Risiko einer falschen Aktivierung der MEMS-Schalter und folglich eines elektrischen Kurzschlusses steigt. Ein hoher Kurzschlussstrom durch die MEMS-Schalter könnte diese jedoch leicht beschädigen. Mittels der Schaltsteuerung können bei Spannungswerten, welche einer Nullspannung, also einer verschwindenden Netzspannung, zu nah sind, die MEMS-Schalter geöffnet werden und somit die Ausfallsicherheit des erfindungsgemäßen Gleichrichters erhöht werden.

Bei dem erfindungsgemäßen Gleichrichter ist die Schaltsteuerung vorzugsweise ausgebildet, die MEMS-Schalter dann zu öffnen, wenn eine den Gleichrichter speisende Spannung, insbesondere eine Wechselspannung, einen Mindestabstand zu einer Nullspannung unterschreitet.

Auf diese Weise können bei dem erfindungsgemäßen Gleichrichter die MEMS-Schalter bei Spannungswerten nah einer verschwindenden Netzspannung geöffnet werden, sodass die Ausfallsicherheit der Energieversorgungseinrichtung weiter erhöht ist. Da in den Bereichen sehr kleiner Netzspannung der Momentanwert des Stromes ebenfalls sehr gering ist - im speziellen bei Verwendung einer aktiven Oberwellenbegrenzung (PFC), bei der Strom und Spannung in Phase sind - ist die erhöhte Verlustleistung im Gleichrichter durch das Abschalten der MEMS-Schalter und den höheren Spannungsabfall durch die Halbleiterdioden vernachlässigbar.

Bei dem erfindungsgemäßen Gleichrichter ist die Schaltsteuerung bevorzugt ausgebildet, die MEMS-Schalter dann zu öffnen, wenn eine den Gleichrichter speisende Spannung, insbesondere eine Wechselspannung, einen Schwellwert für einen Oberwellenanteil überschreitet.

Ein hoher Oberwellenanteil und eine daraus resultierende Abweichung von einem sinusförmigen Verlauf der Netzspannung erschwert ein rechtzeitiges Vorhersagen eines Nulldurchgangs der Netzspannung, sodass das Risiko steigt, die MEMS-Schalter falsch zu schalten und somit einen Kurzschluss hervorzurufen. Mittels dieser Weiterbildung der Erfindung, bei welcher die MEMS-Schalter bei einem gewissen Oberwellenanteil geöffnet werden, ist dieses Risiko wirksam reduziert. Folglich sind die Ausfallsicherheit und die Betriebssicherheit des erfindungsgemäßen Energieversorgungsgeräts deutlich erhöht.

Zweckmäßig weist bei dem erfindungsgemäßen Gleichrichter die Schaltsteuerung ein oder mehrere Erfassungsmittel zur Erfassung eines Spannungswerts der Netzspannung und/oder eines zeitlichen Verlaufs der Netzspannung auf. Besonders bevorzugt weist die Schaltsteuerung eine Oberwellenanteilbestimmungseinrichtung auf, welche anhand eines Spannungswerts oder anhand eines zeitlichen Verlaufs einen Oberwellenanteil der Netzspannung bestimmt. Alternativ oder zusätzlich weist die Schaltsteuerung eines oder mehrere Stromerfassungsmittel auf, welche zur Erfassung eines Stroms durch einen oder mehrere oder sämtliche der MEMS-Schalter und/oder ggf. parallel geschalteten Diodengleichrichter ausgebildet ist/sind.

Bei dem erfindungsgemäßen Gleichrichter ist die Schaltsteuerung bevorzugt ausgebildet, die MEMS-Schalter dann zu öffnen, wenn ein durch einen oder mehrere oder sämtliche der MEMS-Schalter hindurchfließender Durchflussstrom einen Schwellwert für den Durchflussstrom überschreitet.

Das erfindungsgemäße Energieversorgungsgerät weist einen erfindungsgemäßen Gleichrichter wie oben beschrieben auf.

Die erfindungsgemäße Anlage weist ein Endgerät und ein erfindungsgemäßes Energieversorgungsgerät auf, wobei das Endgerät mit dem Energieversorgungsgerät zur Energieversorgung des Endgeräts zusammenschaltbar ist.

Nachfolgend wird die Erfindung anhand eines in der Zeichnung dargestellten Ausführungsbeispiels näher erläutert. Es zeigen:
- Fig. 1: eine erfindungsgemäße Anlage mit einer erfindungsgemäßen Energieversorgung, die einen erfindungsgemäßen Gleichrichter umfasst, schematisch in einer Prinzipskizze,
- Fig. 2: den Gleichrichter gem. Fig. 1 in einer ersten Schaltstellung schematisch in einem Schaltbild,
- Fig. 3: den Gleichrichter gem. Fig. 2 in einer zweiten Schaltstellung schematisch in einem Schaltbild,

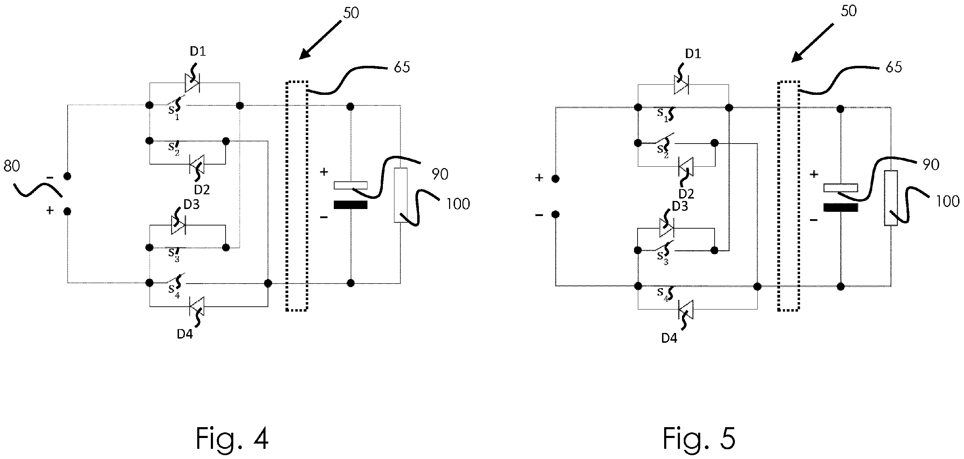

- Fig. 4: ein weiteres Ausführungsbeispiel eines Gleichrichters gem. Fig. 1 in einer ersten Schaltstellung schematisch in einem Schaltbild,
- Fig. 5: den Gleichrichter gem. Fig. 4 in einer zweiten Schaltstellung schematisch in einem Schaltbild sowie
- Fig. 6: ein Steuerverfahren zur Steuerung der Gleichrichter gem. den Figuren 2 und 3 sowie den Figuren 4 und 5 schematisch in einer Prinzipskizze.

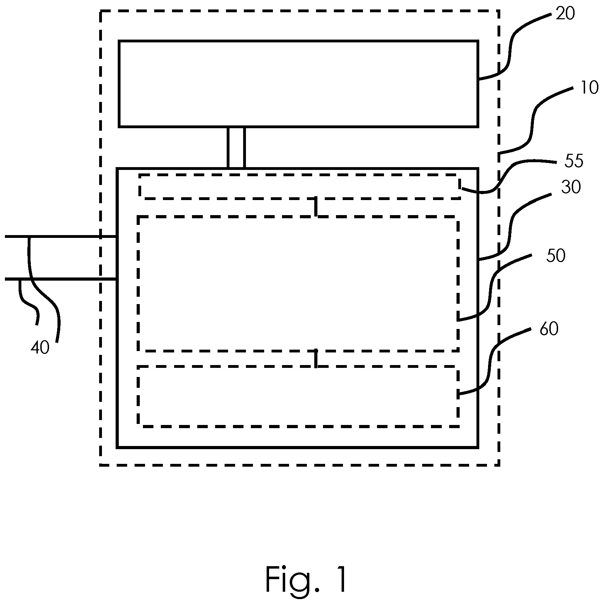

Die in Fig. 1 dargestellte erfindungsgemäße Anlage ist eine Automatisierungsanlage 10 und umfasst ein Endgerät in Gestalt eines Steuergeräts 20 sowie ein Energieversorgungsgerät 30. Das Steuergerät 20 wird mittels des Energieversorgungsgeräts 30 mit einer Gleichspannung versorgt, welche das Steuergerät 20 zum Betrieb erfordert.

Das Energieversorgungsgerät 30 ist mittels eines Wechselspannungsanschlusses 40 mit einer Wechselspannung versorgt. Das Energieversorgungsgerät 30 weist einen erfindungsgemäßen Gleichrichter 50 auf, welcher die Wechselspannung in eine Gleichspannung umwandelt. Der Gleichrichter 50 wird mittels einer Schaltsteuerung 60 gesteuert. Der Aufbau des Gleichrichters 50 sowie die Funktionsweise der Schaltsteuerung 60 wird nachfolgend näher erläutert. In einem optional eingesetzten Wandler 55 wird die gleichgerichtete und eventuell im aktiven PFC auf ein höheres Spannungsniveau gebrachte Netzspannung in eine - meist geringere - Ausgangsspannung gewandelt.

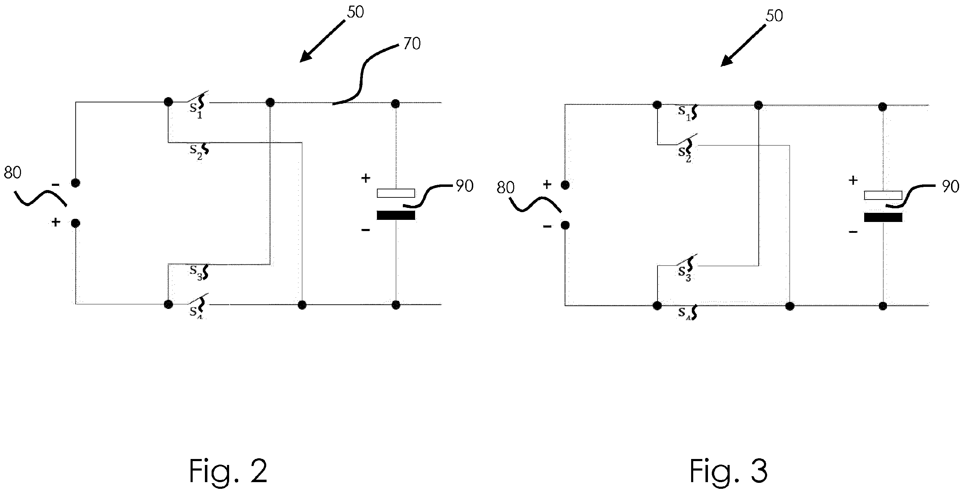

Der Gleichrichter 50 wird in einem ersten Ausführungsbeispiel anhand der Figuren 2 und 3 beschrieben:
Der Gleichrichter 50 umfasst eine Graetz-Schaltung von vier Stromventilen, welche eine an dem Wechselspannungsanschluss 40 eingespeiste Wechselspannung 80 in eine Gleichspannung wandelt, die einen Kondensator 90 des Gleichrichters 50 lädt. Der Kondensator 90 bildet einen Zwischenkreiskondensator des Gleichrichters 50.

Die vier Stromventile der Graetz-Schaltung liegen erfindungsgemäß als MEMS-Schalter S₁, S₂, S₃, S₄ vor, welche im dargestellten Ausführungsbeispiel wie in der Druckschrift DE 102017215236 A1 *"MEMS-Schalter und Verfahren zur Herstellung eines MEMS-Schalters"* beschrieben hergestellt und ausgebildet sind. Die Graetz-Schaltung entspricht hinsichtlich ihrer Schaltungstopologie bekannten Graetz-Schaltungen, welche mit Dioden als Stromventilen gebildet sind. Solche Graetz-Schaltungen sind beispielsweise beschrieben unter der URL en.wikibooks.org/wiki/Electronics_Fundamentals/Diode_Circuit.

Die MEMS-Schalter S₁, S₂, S₃, S₄ sind in an sich bekannter Weise mittels elektrischer Leitungsverbindungen 70 zur Graetz-Schaltung verbunden. Die Graetz-Schaltung führt dabei eine momentan (in der Darstellung der Fig. 2) unten eingespeiste positive Spannung der Wechselspannung 80 an eine obere Elektrode des Kondensators 90, wenn die MEMS-Schalter S₂ und S₃ geschlossen und die MEMS-Schalter S₁ und S₄ geöffnet sind. Entsprechend wird die eine momentan oben eingespeiste negative Spannung der Wechselspannung 80 an eine untere Elektrode des Kondensators 90 geführt. In der Schaltstellung der Fig. 3 hingegen sind bei der Graetz-Schaltung des Gleichrichters 50 die MEMS-Schalter S₁ und S₄ geschlossen und die MEMS-Schalter S₂ und S₃ geöffnet, sodass eine oben eingespeiste positive momentane Spannung der Wechselspannung 80 an die obere Elektrode des Kondensators 90 geführt wird und eine unten eingespeiste momentane negative Spannung der Wechselspannung 80 an die untere Elektrode des Kondensators 90 geführt wird.

Folglich liegt bei dem Gleichrichter 50 immer dann eine positive Spannung an der oberen Elektrode des Kondensators 90 sowie eine negative Spannung an der unteren Elektrode des Kondensators 90 an, wenn die MEMS-Schalter S₁ und S₄ sowie S₂ und S₃ jeweils bei einem Nulldurchgang der Wechselspannung 80 von einer geöffneten Schaltstellung in eine geschlossene Schaltstellung überführt werden oder einer geschlossenen Schaltstellung in eine geöffnete Schaltstellung überführt werden. In einem solchen Betrieb wechseln sich die Schaltstellungen der Figuren 2 und 3 folglich mit der Frequenz der Wechselspannung 80 miteinander ab und der Kondensator 90 wird mittels einer demgemäß an diesem anliegenden Gleichspannung geladen.

Die MEMS-Schalter S₁, S₂, S₃, S₄ werden von der Schaltsteuerung 60 in der beschriebenen Weise angesteuert, sodass die MEMS-Schalter S₁, S₂, S₃, S₄ als Stromventile operieren und die im Stand der Technik eingesetzten und mit Dioden gebildeten Stromventile ersetzen.

In einem zweiten Ausführungsbeispiel ist der Gleichrichter 50 gleichartig dem in den Figuren 2 und 3 dargestellten Gleichrichter 50 aufgebaut. Der Gleichrichter 50 dieses zweiten Ausführungsbeispiels unterscheidet sich lediglich dadurch von dem zuvor beschriebenen, dass dieser zusätzliche Schutzdioden D₁, D₂, D₃, D₄ aufweist, welche jeweils zu einem der MEMS-Schalter S₁, S₂, S₃, S₄ parallel geschaltet sind. Dabei sind die Schutzdioden D₁, D₂, D₃, D₄ genau derart parallel zu dem MEMS-Schaltern S₁, S₂, S₃, S₄ geschaltet und orientiert, dass die Schutzdioden D₁, D₂, D₃, D₄ die Stromventilfunktion der angesteuerten MEMS-Schalter S₁, S₂, S₃, S₄ ersetzten, wenn die MEMS-Schalter S₁, S₂, S₃, S₄ sich in einer Offenstellung befänden. Auf diese Weise können mögliche Schädigungen der MEMS-Schalter S₁, S₂, S₃, S₄ infolge von Spannungsspitzen vermieden werden. So können grundsätzlich bei dem Gleichrichter 50 Spannungsspitzen wie insbesondere sogenannte Surge-Impulse auftreten. Solche Spannungsspitzen stellen einen Spannungsanstieg der Wechselspannung dar, der über die aktuelle Spannung des Kondensators 90 hinaus geht. Aufgrund des geringen ohmschen Widerstandes des Kondensators 90 können solche Spannungsspitzen zu einem sehr hohen Stromimpuls durch die MEMS-Schalter S₁, S₂, S₃, S₄ führen. Solche hohen Stromimpulse können zu einem Verschweißen von Schaltkontakten der MEMS-Schalter S₁, S₂, S₃, S₄ führen. Die Schutzdioden D₁, D₂, D₃, D₄ hingegen weisen selbst bei großen Strömen vergleichsweise geringe Flussspannungen von wenigen Volt auf. Im dargestellten Ausführungsbeispiel sind die Schutzdioden D₁, D₂, D₃, D₄ mit Siliziumdioden gebildet, welche selbst bei Stromstärken von einigen 100 A Flussspannungen von höchstens 1,5 V aufweisen. Somit ist infolge der Schutzdioden D₁, D₂, D₃, D₄ die maximale an den MEMS-Schaltern S₁, S₂, S₃, S₄ jeweils anliegende Spannung auf höchstens 1,5 V begrenzt. Folglich ist aufgrund des festliegenden Innenwiderstandes 100 der MEMS-Schalter S₁, S₂, S₃, S₄ der jeweils durch die MEMS-Schalter S₁, S₂, S₃, S₄ fließende maximale Strom begrenzt. Daher wird mittels der Schutzdioden D₁, D₂, D₃, D₄ ein Verschweißen von Schaltkontakten der MEMS-Schalter S₁, S₂, S₃, S₄ wirksam ausgeschlossen. Da MEMS-schalter - im Gegensatz zu Dioden - in beide Richtungen einen Stromfluss erlauben, ist bei Einsatz einer aktiven Oberwellenbegrenzung mit sinusförmigen Netzstrom mittels PFC (dargestellt als optionale Einheit 65) betriebsbedingt eine Diode oder ein gesteuerter Schalter mit Dioden-ähnlichem Verhalten eingesetzt, sodass sodass zu Zeiten wenn die Spannung des Kondensators 90 höher ist als der Momentanwert der Netzspannung kein Strom aus den Kondensatoren zurück ins Netz fliessen kann.

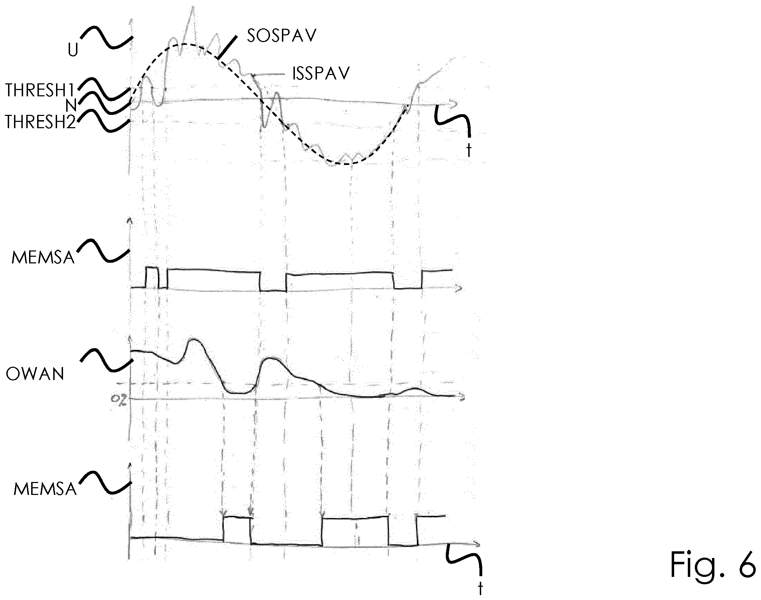

Die Schaltsteuerung 60 operiert gemäß dem in Fig. 6 dargestellten Schaltverfahren:
Mittels eines in der Zeichnung nicht eigens dargestellten Spannungsmessers der Schaltsteuerung 60 wird der Verlauf ISSPAV der momentanen Wechselspannung 80 über die Zeit t kontinuierlich gemessen.

Zur Vermeidung von Lichtbogen infolge von sich entladenden Induktivitäten werden die MEMS-Schalter S₁, S₂, S₃, S₄ abhängig von der erfassten Wechselspannung abgeschaltet. Dazu werden die MEMS-Schalter S₁, S₂, S₃, S₄ abgeschaltet, bevor die Wechselspannung 80 einen erwarteten Nullpunkt erreicht. Dann wird die Gleichrichtung mittels der Schutzdioden D₁, D₂, D₃, D₄ durchgeführt, wobei nur geringe Verluste resultieren.

Dazu werden Schwellwerte THRESH1, THRESH2 festgelegt, welche einen, im dargestellten Ausführungsbeispiel symmetrischen, Spannungsbereich um eine Nullspannung N bilden, innerhalb welcher die MEMS-Schalter S₁, S₂, S₃, S₄ abgeschaltet werden, sodass die Gleichrichtung bei Spannungen innerhalb dieses Spannungsbereichs lediglich mittels der Schutzdioden D₁, D₂, D₃, D₄ erfolgt. Auf diese Weise werden die MEMS-Schalter S₁, S₂, S₃, S₄ bei einem momentanen Spannungswert der Wechselspannung abgeschaltet, welcher einen durch die Schwellwerte THRESH1, THRESH2 definierten Sicherheitsabstand vom erwarteten Nullpunkt unterschreitet. Diese entsprechende Abschaltung wird im dargestellten Ausführungsbeispiel derart erreicht, dass die Schaltsteuerung 60 die MEMS-Schalter S₁, S₂, S₃, S₄ nur dann, wenn der momentane Spannungswert der Wechselspannung 80 außerhalb des durch die Schwellwerte THRESH1, THRESH2 gekennzeichneten Spannungsbereichs befindlich ist, mittels eines Aktivierungssignals MEMSA aktiviert und bei Erreichen des Spannungsbereichs das Aktivierungssignal MEMSA abschaltet.

In einer in Fig. 6 dargestellten Erweiterung des Ausführungsbeispiels wird nicht allein der momentane Spannungsverlauf ISSPAV herangezogen, sondern aus dem momentanen Spannungsverlauf ISSPAV wird zusätzlich der Oberwellenanteil des momentanen Spannungsverlaufs ISSPAV berechnet. Da bei einem hinreichend großen Oberwellenanteil der momentane Spannungsverlauf ISSPAV derart stark von einem sinusförmigen Sollspannungsverlauf SOSPAV abweicht, besteht ein nicht zu vernachlässigendes Risiko, dass ein Nulldurchgang der Wechselspannung 80 früher erfolgt als nach den Sollspannungsverlauf SOSPAV erwartet. In dieser Erweiterung des Ausführungsbeispiels werden die MEMS-Schalter S₁, S₂, S₃, S₄ mittels eines Aktivierungssignals MEMSA nur dann aktiviert, wenn zum einen der momentane Spannungswert der Wechselspannung 80 außerhalb des durch die Schwellwerte THRESH1, THRESH2 gekennzeichneten Spannungsbereichs befindlich ist und zugleich der Oberwellenanteil hinreichend klein ist. Im dargestellten Ausführungsbeispiel betragen die Schwellwerte THRESH1, THRESH2 20 Prozent sowie -20 Prozent des maximalen Spannungswertes der Wechselspannung 80. Im dargestellten Ausführungsbeispiel ist der Oberwellenanteil dann hinreichend klein, wenn er eine Grenze von höchstens 30 Prozent nicht überschreitet. In anderen Ausführungsbeispielen, welche im Übrigen dem dargestellten Ausführungsbeispiel entsprechen, gelten andere Werte für die Schwellwerte THRESH1, THRESH2 sowie eine andere Grenze für den Oberwellenanteil.

## Patentansprüche

1. Gleichrichter mit einer mit Stromventilen gebildeten Gleichrichterschaltung, bei welcher die Stromventile mit MEMS-Schaltern (S₁, S₂, S₃, S₄) gebildet sind.

2. Gleichrichter nach Anspruch 1, bei welchem die Gleichrichterschaltung eine Brückenschaltung ist oder aufweist oder die Gleichrichterschaltung eine Brideless-PFC-Schaltung aufweist.

3. Gleichrichter nach dem vorhergehenden Anspruch, bei welchem die Brückenschaltung eine Graetz-Schaltung ist oder aufweist.

4. Gleichrichter nach einem der vorhergehenden Ansprüche, bei welchem die MEMS-Schalter (S₁, S₂, S₃, S₄) zum Schalten oder Öffnen angesteuert sind.

5. Gleichrichter nach einem der vorhergehenden Ansprüche, bei welchem die Gleichrichterschaltung zu den MEMS-Schaltern (S₁, S₂, S₃, S₄) parallel geschaltete Dioden (D₁, D₂, D₃, D₄) umfasst.

6. Gleichrichter nach einem der vorhergehenden Ansprüche, bei welchem die Dioden (D₁, D₂, D₃, D₄) derart orientiert und geschaltet sind, dass die Dioden (D₁, D₂, D₃, D₄) bei geöffneten MEMS-Schaltern (S₁, S₂, S₃, S₄) mit übrigen Teilen des Gleichrichters eine Gleichrichterschaltung, vorzugsweise eine Brückenschaltung und insbesondere eine Graetz-Schaltung bilden.

7. Gleichrichter nach einem der vorhergehenden Ansprüche mit einer Schaltsteuerung (60), bei welchem die Schaltsteuerung (60) ausgebildet ist, die MEMS-Schalter (S₁, S₂, S₃, S₄) zum Schalten und Öffnen anzusteuern.

8. Gleichrichter nach einem der vorhergehenden Ansprüche, bei welchem die Schaltsteuerung (60) ausgebildet ist, die MEMS-Schalter (S₁, S₂, S₃, S₄) dann zu öffnen, wenn eine den Gleichrichter (50) speisende Spannung (80), insbesondere eine Wechselspannung, einen Mindestabstand (THRESH1, THRESH2) zu einer Nullspannung (N) unterschreitet.

9. Gleichrichter nach einem der vorhergehenden Ansprüche, bei welchem die Schaltsteuerung (60) ausgebildet ist, die MEMS-Schalter (S₁, S₂, S₃, S₄) dann zu öffnen, wenn eine den Gleichrichter (50) speisende Spannung (80), insbesondere eine Wechselspannung, einen Schwellwert für einen Oberwellenanteil (OWAN) überschreitet.

10. Energieversorgungsgerät mit einem Gleichrichter (50) nach einem der vorhergehenden Ansprüche.

11. Anlage mit einem Endgerät und mit einem Energieversorgungsgerät nach einem der vorhergehenden Ansprüche, bei welchem das Endgerät (20) mit dem Energieversorgungsgerät (30) zur Energieversorgung des Endgeräts (20) zusammenschaltbar ist.
